Europäisches Patentamt

(19) European Patent Office

Office européen des brevets

(11) Publication number: **0 343 990**
**A2**

## (12) EUROPEAN PATENT APPLICATION

(21) Application number: **89305315.7**

(22) Date of filing: **25.05.89**

(51) Int. Cl.⁴: **B 60 C 23/00**

(30) Priority: **25.05.88 US 198411**

(43) Date of publication of application:
**29.11.89 Bulletin 89/48**

(84) Designated Contracting States:
**AT CH DE ES FR GB IT LI NL SE**

(71) Applicant: **EATON CORPORATION**
**Eaton Center, 1111 Superior Avenue**
**Cleveland Ohio 44114 (US)**

(72) Inventor: **Beverly, James Alden**
**5619 Brandychase**
**Kalamazoo Michigan 49002 (US)**

**Pickornik, William**
**7165 Lakeridge**
**Kalamazoo Michigan 49009 (US)**

(74) Representative: **Wright, Peter David John et al**
**R.G.C. Jenkins & Co. 26 Caxton Street**
**London SW1H 0RJ (GB)**

(54) **Tire leak detection method for central tire inflation system.**

(57) A diagnostic method for sensing conditions indicative of leakage in an inflatable tire (12,14) the pressure of which is measured and controlled as a member of a group of tires by an on-board CTIS (10), said CTIS measuring inflation pressure of said group of tires by fluidly connecting the interior pressurized chambers of all of siad tires to a common conduit (42/44) and then sensing the pressure in a second fluid conduit (40/20) tending to have the same presssure as said common conduit; said method characterized by:

fluidly connecting the interior chambers of all of the tires of said group of tires to said common conduit;

allowing said common conduit and said second fluid conduit to assume a substantially equalibrium condition while taking a series of sensings of the pressurization in said second fluid conduit at predetermined time intervals ($T_1$-$T_2$, $T_2$-$T_3$, $T_3$-$T_4$) and generating signals indicative thereof;

processing said signals to calculate a value indicative of the rate of decrease of pressure in said second fluid conduit; and comparing said calculated value to a first reference value corresponding to said calculated value at conditions of maximum acceptable tire pressure imbalance within said group of tires.

A system for carrying out such a method is also discribed and claimed.

Fig.1

Bundesdruckerei Berlin

Description

# TIRE LEAK DETECTION METHOD FOR CENTRAL TIRE INFLATION SYSTEM

## BACKGROUND OF THE INVENTION

### Field of the Invention

The present invention relates to a method for detecting a leaking tire resulting in a significant pressure imbalance in an on-board central tire inflation system of the type having a plurality of inflatable tires each fluidly communicatable by branch conduit means to a common central conduit having pressure measurement means for measuring a pressure value indicative of the average inflation pressurization of the tires. Preferably, each of the tires will have a wheel-end valve for selectively establishing or blocking fluid communication between the tire and the common central conduit.

### Description of the Prior Art

Central tire inflation systems, also known as tire traction systems, are well known in the prior art as may be seen by reference to U.S. Patent Nos. 2,634,782; 2,976,906; 2,989,999; 3,099,309; 3,102,573; 3,276,502; 3,276,503; 4,313,483; 4,418,737; 4,421,151; 4,434,833; 4,640,331 and 4,678,017, the disclosures of all of which are hereby incorporated by reference. CTIS allow the operator to remotely manually and/or automatically vary and/or maintain the inflation pressure of one or more of the vehicle tires from the vehicle (usually a truck) air system, usually while the vehicle is in motion as well as when the vehicle is at rest.

It is well known that the traction of vehicles on relatively soft terrain (i.e. on mud, sand or snow) may be greatly improved by decreasing the inflation pressure within the tires. By decreasing the inflation pressure, the tire supporting surface (usually called the "footprint") will increase thereby enlarging the contact area between the tires and the terrain. Additionally, it is often desirable to decrease the tire pressure from the over-the-road or highway inflation pressure to increase riding comfort on rough roads. On the other hand, higher tire pressures decrease rolling resistance and tire carcass temperatures on smooth roads thereby increasing economy and safety. Accordingly, in cross country vehicles it is desirable to change the inflation pressure in the pneumatic tires to fit the terrain and is also desirable that a system be provided for changing the inflation pressure of the tires from an on-board source, while the vehicle is at motion or at rest and that the system be controlled from the vehicles operating cab.

In a particular type of CTIS, as illustrated and described in above-mentioned U.S. Patent No. 4,640,331, a plurality of wheel ends (each comprising one or more tires) are each fluidly connected by a separate branch conduit to common central conduit which may be connected to a source of pressurized air for inflating the tires, to a source of regulated pressurized air for deflating the tires and/or, to atmosphere for venting the conduits and relieving pressure across the rotating seals. The common conduit may also be pressurized by means of a quick release valve or the like to the average pressure of the various branch conduits. A single pressure transducer is provided in fluid communication with the common central conduit, remote from the wheel ends, for sensing a value indicative of the pressure or average passage in the inflatable tires.

While the on-board CTIS described above is highly advantageous as pressure venting is remote from the wheel ends and a single pressure transducer, located in a relatively well protected location remote from the wheel ends and/or the vehicle under carriage, can be utilized to sense tire inflation of the vehicle tires or groups of tires, the CTIS was not totally satisfactory as a method for detecting, in a relatively short period of time, leakage/damage of a single tire the inflation pressure of which is sensed and controlled as a member of a grouping of tires, was not provided. Failure to sense significant leakage/damage may result in undesirable loss of pressure from the undamaged tires during attempts to inflate the damaged tire(s) which may result in a loss of vehicle mobility.

## SUMMARY OF THE INVENTION

In accordance with the present invention, the drawbacks of the prior art are minimized or eliminate by the provision of a CTIS control system having a method for detecting, in a relatively short period of time, a condition indicative of a leaking/damaged tire in a group of tires whose inflation pressure is measured and controlled as a group by means of a remote pressure transducer fluidly connectable to a common central conduit pressurizable to a pressure indicative of the average pressure of said group of tires.

The above is accomplished by causing the common conduit to be fluidly connected to all of the tires and then allowed to stabilize and be maintained at a pressure indicative of the current average pressure of the tires, taking a plurality of pressure readings of the pressure in said common conduits at timed intervals, calculating the rate of change (decrease) of said readings and declaring a leaking/damaged tire condition of said calculated rate is less than a predetermined reference value.

While leakage of a tire, especially a large truck tire, is not easily detectable over a one (1.00) to one and a half (1.50) second measuring period, the decrease in pressure of a common conduit due to cross breathing after the damaged and acceptable tires are fluidly connected after an extended period of fluid isolation is detectable.

Upon detection of a leaking/damaged tire condition, the CTIS controller, preferably microprocessor based, will signal the vehicle operator of the condition and shutdown (i.e. close wheel end valves and discontinue pressure sensing/adjusting operation) the CTIS system. The vehicle operator may be allowed to override the shutdown of the CTIS system and resume operation.

Accordingly, it is an object of the present invention to provide a new and improved control method for an on-board central tire inflation system.

This and other objects and advantages of the present invention will become apparent from a reading of the following description of the preferred embodiments taken in connection with the attached drawings.

## BRIEF DESCRIPTION OF THE DRAWINGS

Figure 1 is a schematic illustration of the pneumatic and electronic components of the present invention as utilized to control the inflation of groups of tires.

Figure 2 is a section view of the quick dump valve schematically illustrated in Figure 1.

Figure 3 is a graph of a Pressure vs. Time illustrating the method of the present invention.

Figure 4 is a schematic illustration of an operator's control panel.

## DESCRIPTION OF THE PREFERRED EMBODIMENT

In the following description of the present invention, certain terms will be utilized for purposes of reference only and are not intended to be limiting. The terms "upward", "downward", "rightward" and "leftward" refer to direction in the drawings to which reference is made. The terms "inward", and "outward", respectively, refer to directions towards and away from, respectively, the geometric center of the device described. The terms "inflation" and "deflation", respectively, refer to increased and decreased, respectively, pressurization of a tire or the like. Said terminology will include the words above specifically mentioned, derivatives thereof and words of similar import.

The advantages of varying the inflation pressure of the pneumatic tires (especially the driven tires) of a vehicle, especially a relatively heavy duty vehicle, in accordance with the terrain over which the vehicle is traveling are well known in the prior art and may be appreciated by reference to above-mentioned U.S. Patent No. 4,640,331. Assuming, for example, the vehicle rear drive axle tires are normally inflated about 75 psi (pounds per square inch) for highway operation, decreasing the tire inflation pressure to be 35 psi for cross country travel over rough road or to about 20-25 psi for operation in sand, mud or snow conditions or to about 10-12 psi for severe emergency conditions, will result in the tire having a greater contact area (i.e. footprint), and improved traction. In addition to improved traction at lower tire inflation pressure, the vehicle will be able to maintain a higher speed over poor ground, and reduce wear and tear on the vehicle, because of the smoother ride over "washboard" type terrain. Conversely, to reduce operating temperature and wear and tear on the tires at highway speed, a higher tire inflation pressure is desired. Of course, to increase mobility, it is highly desirable that the tire inflation pressures be controllable from the vehicle cab from an on-board source of pressurized fluid and be variable and maintainable with the vehicle in motion as well as when the vehicle is at rest.

In an on-board CTIS system wherein the pressurization of certain tires, such as the tires on a particular axle or set of axles, is measured and controlled as a group by periodically fluidly communicating the tire pressures with a common conduit during pressure measurement and control operations, it is desirable that the CTIS control have a method for detecting one of the tires of the group leaking or damaged beyond acceptable limits, to notify the vehicle operator of such condition and to shutoff the CTIS to block fluid communication between the tires of the group to prevent the undamaged tires from undesirably bleeding off into the damaged/leaking tire or deflating through a quick release valve or the like. Preferably, the operator will be provided with means by which the shutoff command can be overriden.

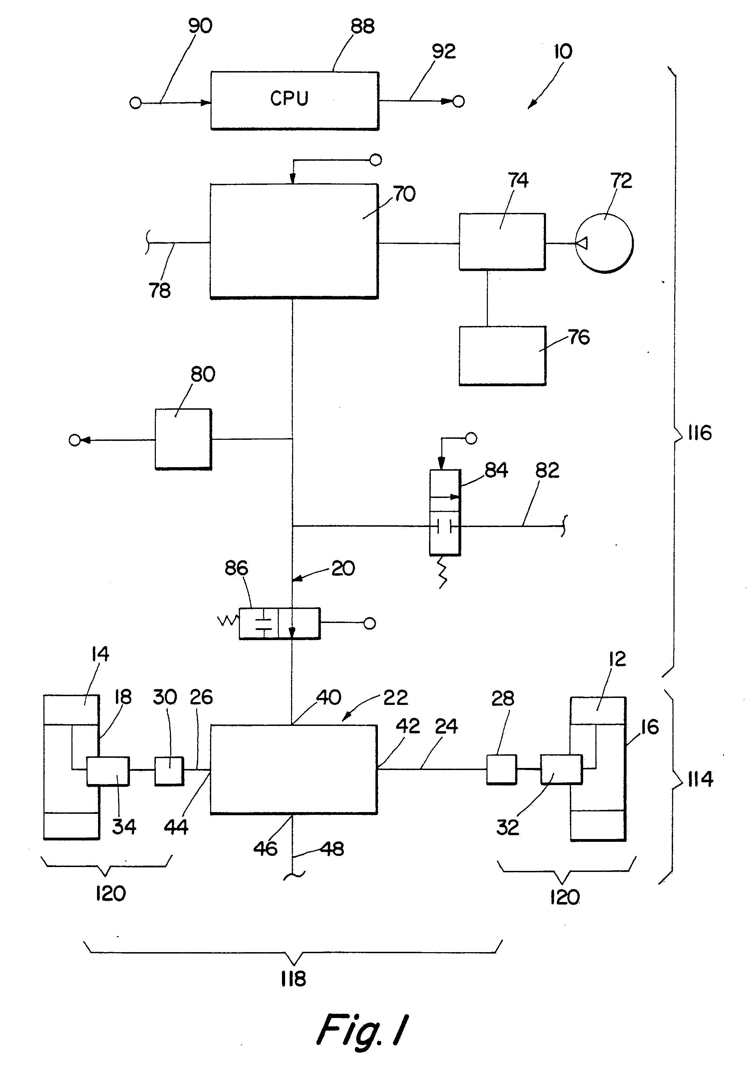

The CTIS control method of the present invention is especially well suited for the type of CTIS 10 schematically illustrated in Figure 1 and disclosed in above-mentioned U.S. Patent No. 4,640,331. CTIS 10 measures and controls the inflation pressure of the interior pressurized chambers 12 and 14 of a group of tires 16 and 18, respectively, by causing the chambers to fluidly communicate with a common conduit, the pressurization of which conduit may be selectively increased, decreased, vented to atmospheric and/or measured. Tires 16 and 18 are typically grouped for this purpose as carried by an axle or set of axles and being of the same ideal inflation pressurization for various operating conditions.

Each of the inflatable chambers 12 and 14 of tires 16 and 18 are fluidly connected to a common quick release valve 22 by means of a branch fluid passage, 24 and 26, respectively. The fluid passages each include a rotary seal assembly, 28 and 30, and a wheel-end valve assembly, 32 and 34. The rotary seal assemblies may be of any construction, such as seen in U.S. Patent No. 4,434, 833, the disclosure of which is incorporated by reference.

The wheel end valves 32 and 34 are normally closed to block fluid communication between the tire chambers and the quick release valve 22 and are effective to be selectively opened to fluidly communicate the tire chambers and valve 22. Wheel end valves 32 and 34 are preferably controlled by pressurization/evacuation in the conduits 24 and 26 and are opened or closed as a group. Wheel end valves 32 and 34 may be of the structures illustrated in above-mentioned U.S. Patent Nos. 4,640,331 and 4,678,017.

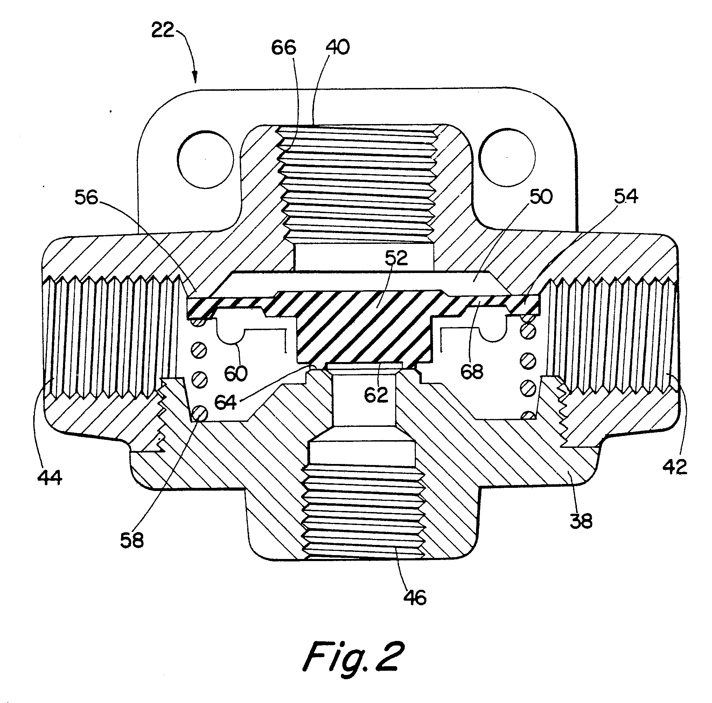

The structure and operational function of valve 22 may be seen in greater detail by reference to Figure 2. Valve 22 includes a valve body 38 defining a first port 40 connected to common conduit 20, a second port 42 connected to passage 24, a third port 44 connected to passage 26 and a fourth port 46 connected to a vent passage 48 to atmosphere. The valve body 38 defines a central cavity 50 in which a valve member such as plug-type diaphragm 52 is received.

The outer periphery 54 of diaphragm 52 cooperates with an annular valve seat 56 to control the flow of fluid between port 40 and the fluidly communicating ports 42 and 44. A spring 58 and spring retainer 60 may be utilized to bias the outer periphery 54 into sealing contact with the valve seat 56. The central plug portion 62 cooperates with an annular valve seat 64 at port 46 to control the flow of fluid between ports 46 and the fluidly communicating ports 42 and 44. Diaphragm plug 62 is biased into sealing engagement with valve seat 64 by means of fluid pressure in conduit 20 acting on upper surface 66. The average pressure in passages 24 and 26 act upon the undersurface 68 of the diaphragm.

The operational characteristics of quick-release valve 22 are that a fluid flow (i.e. flow of higher pressurized fluid to a conduit or chamber at a lower pressurization) may be maintained from port 40 to ports 42 and 44. However, a fluid flow may not be maintained from ports 42 and 44 to port 40 as diaphragm 52 will lift to open ports 42 and 44 to the exhaust port 46. Further, the valve 22, by establishing fluid communication from port 40 to ports 42 and 44, and from the pressure of conduits 20, 24 and 26, ports 42 and 44 (conduits 24 and 26) to exhaust port 46, is effective to equalize at the pressurization of the lower pressurized of conduit 20 or average pressure of conduits 24 and 26.

It is important to note that quick-release valve 22 through which the various valves at the wheel end assemblies are vented, is located remote from the wheel end assembly and may also be located remotely from the control valve and pressure transducer to be described below.

If a pressure differential exists between tires 16 and 18, when the wheel end valves are opened and the conduit 20 is sealed, the pressure in conduit 20 will initially be the higher of the tire pressures and will decrease to an average of the tire pressures as the tires cross breath.

A control valve assembly 70 is connected to a source of pressurized fluid, such as on-board compressor 72. Typically, compressor 72 will communicate with a vehicle air brake wet tank 74 which will supply the air brake system 76 with a higher priority than the CTIS control valve assembly 70. The control valve assembly is also connected to a vent passage 78 to atmosphere and to the central conduit 20.

The control valve assembly is effective to selectively vent conduit 20 to atmosphere to vent passages 24 and 26, to pressurize conduit 20 to a relatively high pressure for inflation of the tires, to pressurize conduit 20 to a relatively low pressure to deflate the tires or to pulse conduit 20 with a high pressure to allow conduit 20 to stabilize at the average pressure in the tire chambers. Preferably, if wheel end valves similar to those disclosed in above-mentioned U.S. Patent Nos. 4,640,331 or 4,678,017 are utilized, pressurization and venting of conduit 20 is also effective to open and close, respectively, the wheel end valves.

A pressure transducer 80 is provided for sensing the pressurization of conduit 20 and for providing an output signal indicative thereof. To obtain an accurate measurement of average tire pressure, wheel end valves 32 and 34 must be opened and conduit 20 must be sealed at control valve assembly 70 to allow the pressure in conduit 20 to attempt to stabilize at average tire pressure.

A second central conduit 82 and a pair of two-way/two-position valves 84 and 86 may be provided to allow the control valves assembly 70 and transducer 80 to be utilized to measure and control a different set of tires.

A central processing unit (CPU) 88, preferably microprocessor based, may be provided for controlling system 10. CPU 88 includes conditioning circuits 90 for receiving input signals, such as signals from pressure transducer 80, conditioning circuits 92 for issuing command output signals and logic (hardware or software) for defining logic rules by which the input signals are processed to generate command output signals.

At system start-up, or periodically during vehicle operation, it is desirable to have a system diagnostic routine or method to test for leakages which may require disabling the system until the condition is repaired.

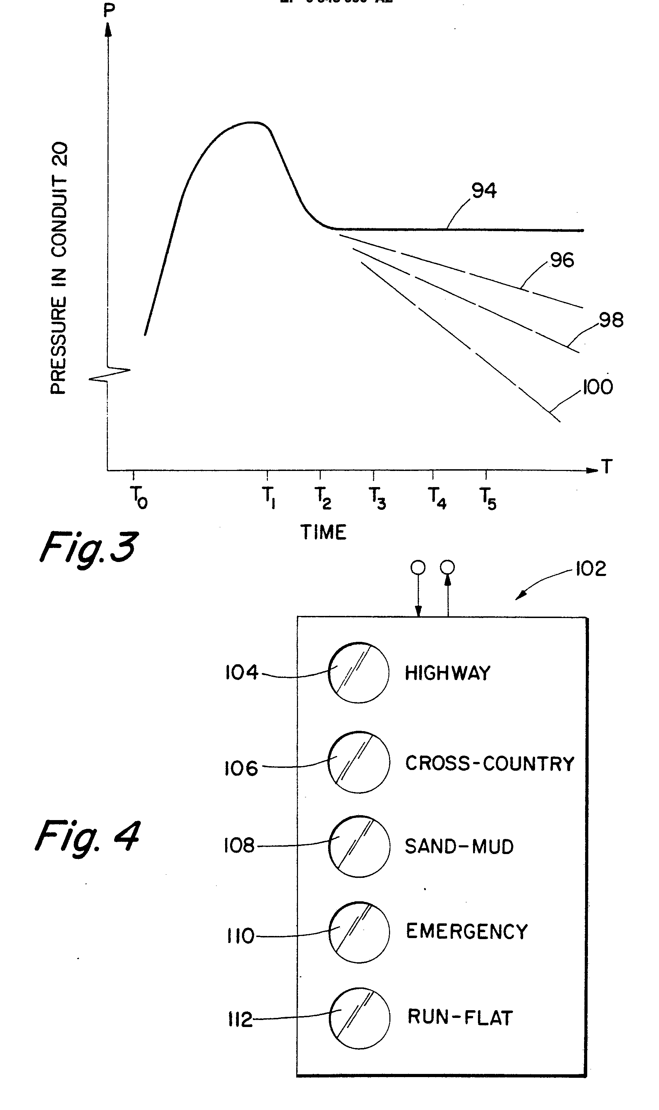

To accomplish this, referring to Figure 3, the control valve assembly will pulse conduit 20 from $T_0$ to $T_1$ and wait until $T_2$ for pressure in conduit 20 to grossly stabilize at a pressure generally equal to the average pressure in the tires 16 and 18. A series of five pressure readings, at $T_2$, $T_3$, $T_4$ and $T_5$, are made to determine the rate of change of pressure during stabilization.

While leakage in a single tire is usually undetectable during the time period $T_2$ to $T_5$ (about 1.25 seconds), if a damaged tire leaks down considerably over time, the decrease in pressure in common conduit to 22 during the time period $T_2$-$T_5$ due to cross breathing between a damaged and an undamaged tires is detectable.

Line 94 is a representation of expected pressure in conduit 20 if no leakage exists. Line 96 is a representation of a maximum acceptable rate of decrease in pressure due to acceptable pressure imbalance, pressure differences due to one tire exposed to sunlight with the other tire in shade, or the like. Line 100 is a representation of a rate of decrease in pressure of conduit 20 indicating an imbalance caused a potentially catastrophic failure at one or more of the tires requiring a non-overridable shutdown of the CTIS.

Line 98 is a representation of a rate of decrease of pressure which is greater than acceptable (line 96) but less than catastrophic (line 100). In these conditions, the vehicle operator is warned of the condition, the system is shut down (i.e. automatic periodic pressure corrections are discontinued as are automatic pressure adjustments based upon vehicle speed or the like). Preferably, the operator is provided with an override option allowing reactivation of the system.

In one embodiment, the vehicle operator is provided with a control panel 102, see Figure 4, having five illuminatable buttons, 104, 106, 108, 110 and 112, by which a desired tire pressurization may be selected. If the tire leak check indicates a condition such as represented by line 98, buttons 104, 106, 108 and 110 will be illuminated and/or flashed to inform the operator of the non-catastrophic, but unacceptable, leakage condition. The operator can then choose to override the shutdown by pushing the unlighted button 112 to reactivate the system. If a leakage rate greater than that represented by line 100 is detected, all five buttons will flash and the system shutdown will not be subject to operator override.

As may be seen by reference to Figure 1, CTIS 10 includes an at-axle portion or portions 114 and a remote portion 116 which may be located anywhere on the vehicle, preferably at a relatively protected location. Further, the at-axle portions 114 of system 10 comprise a stationary portion 118 and rotating portions 120.

Although the preferred embodiments of the present invention have been described with a certain degree of particularity, it is understood, of course, that certain substitutions for and rearrangement of the parts may be resorted to without departing of the spirit and the scope of the present invention as hereinafter claimed.

## Claims

Claim 1. A diagnostic method for sensing conditions indicative of leakage in an inflatable tire (12, 14) the pressure of which is measured and controlled as a member of a group of tires by an on-board CTIS (10), said CTIS measuring inflation pressure of said group of tires by fluidly connecting the interior pressurized chambers of all of said tires to a common conduit (42/44) and then sensing the pressure in a second fluid conduit (40/20) tending to have the same pressure as said common conduit; said method characterized by:
fluidly connecting the interior chambers of all of the tires of said group of tires to said common conduit;
allowing said common conduit and said second fluid conduit to assume a substantially equilibrium condition while taking a series of sensings of the pressurization in said second fluid conduit at predetermined time intervals ($T_1$-$T_2$, $T_2$-$T_3$, $T_3$-$T_4$) and generating signals indicative thereof;
processing said signals to calculate a value indicative of the rate of decrease of pressure in said second fluid conduit; and
comparing said calculated value to a first reference value corresponding to said calculated value at conditions of maximum acceptable tire pressure imbalance within said group of tires.

Claim 2. The method of claim 1 further characterized in that, if said calculated value exceeds said first reference value, signalling the presence of an unacceptable tire condition and inhibiting further control of the inflation pressurization of said tires.

Claim 3. The method of claim 2 further characterized by allowing override of said inhibiting of further control of the inflation pressurization of said tires.

Claim 4. The method of claim 2 further characterized by comparing said calculated value to a second reference corresponding to said calculated value at pressure imbalance conditions indicative of catastrophic damage to one of said tires and, if said calculated value exceeds said second reference value, signalling the presence of a catastrophic tire damage condition and preventing in a non-overridable manner, further control of the inflation pressurization of said tires.

Claim 5. The method of claim 3 further characterized by comparing said calculated value to a second reference corresponding to said calculated value at pressure imbalance conditions indicative of catastrophic damage to one of said tires and, if said calculated value exceeds said second reference value, signalling the presence of a catastrophic tire damage condition and preventing in a non-overridable manner, and control of the inflation pressurization of said tires.

Claim 6. The method of claim 1 wherein said sequence is performed at every vehicle startup.

Claim 7. The method of claim 1 wherein said sequence is performed automatically at predetermined intervals during continuing vehicle operation.

Claim 8. The method of claim 1 wherein said series of sensings occurs over a period of about 1.25 seconds.

Claim 9. The method of claim 3 wherein said series of sensings occurs over a period of about 1.25 seconds.

Claim 10. The method of claim 7 wherein said series of sensings occurs over a period of about 1.25 seconds.

Claim 11. The method of claim 1 wherein said CTIS includes a pressure transducer for taking said series of pressure sensings, said pressure transducer and a portion of said common conduit located on said vehicle remote from said tires.

Claim 12. The method of claim 11 wherein said CTIS controls the pressurization of multiple groups of tires and said common conduit is selectively fluidly connectable and disconnectable to each of said groups of tires.

Claim 13. A diagnostic system for sensing conditions indicative of leakage in an inflatable tire the pressure of which is measured and controlled as a member of a group of tires by an on-board CTIS, said CTIS measuring inflation pressure of said group of tires by fluidly connecting the interior pressurized chambers of all of said tires to a common conduit, causing the pressurization of a second fluid conduit to equal the pressurization of said common fluid conduit, and then sensing the pressure in said second fluid conduit; said system characterized by:
means for fluidly connecting the interior chambers of all of the tires of said group of tires to said common conduit;
means for allowing the common conduit and said second fluid conduit to assume a substantially equilibrium condition while taking a series of sensings of the pressurization in said second fluid conduit at predetermined time intervals and generating signals indicative thereof;

means for processing said signals to calculate a value indicative of the rate of decrease of pressure in said conduit; and

means for comparing said calculated value to a first reference value corresponding to said calculated value at conditions of maximum acceptable tire pressure imbalance within said group of tires.

Claim 14. The system of claim 13 further characterized by means effective, if said calculated value exceeds said first reference value, for signalling the presence of an unacceptable tire condition and inhibiting further control of the inflation pressurization of said tires.

Claim 15. The method of claim 14 further characterized by allowing override of said inhibiting of further means for control of the inflation pressurization of said tires.

*Fig. 1*

*Fig.2*

Fig.3

Fig. 4